# EUROPÄISCHE PATENTSCHRIFT

(11) **EP 1 901 826 B1**
(45) Veröffentlichungstag und Bekanntmachung des Hinweises auf die Patenterteilung: **22.09.2010**
(21) Anmeldenummer: 06761690.4
(22) Anmeldetag: 23.06.2006
(51) Int. Cl.: B01D 46/52

(54) **FILTERELEMENT**
FILTER ELEMENT
ELEMENT FILTRANT

(30) Priorität: 02.07.2005 DE 102005031058
(43) Veröffentlichungstag der Anmeldung: 26.03.2008
(60) Teilanmeldung: 10173412.7
(73) Patentinhaber: Mahle International GmbH, 70376 Stuttgart (DE)
(72) Erfinder: WAIBEL, Hans, 71686 Remseck/Aldingen (DE)
(74) Vertreter: BRP Renaud & Partner
(86) Internationale Anmeldenummer: PCT/DE2006/001069
(87) Internationale Veröffentlichungsnummer: WO 2007/003159

(56) Entgegenhaltungen:
- EP-A- 1 582 248
- WO-A2-03/084641

## Beschreibung

Die Erfindung betrifft ein Filterelement, bei dem das Filterelement einen zylindrisch geformten, porösen, in Richtung der Zylinderachse durchströmbaren Filtermaterialkern umfasst sowie einen, den Filtermaterialkern radial einenends dicht umschließenden Rahmen mit Dicht- und Haltemitteln, über die das Filterelement dicht in ein Filtergehäuse einsetzbar ist.

Der Filtermaterialkern kann beispielsweise aus einem Filtermedium bestehen, wie es aus EP 0 900 118 B1 und WO 02/20135 A2 bekannt ist. Die Fluidströmung erfolgt bei einem solchen wabenartig aufgebauten Filterelement in der Weise, dass rohrförmige Strömungskanäle, in die das zu filternde Fluid an einem Ende einströmt, jeweils an dem anderen Ende verschlossen sind, damit das Fluid durch die Umfangswände dieser Kanäle in benachbarte Kanäle einströmen kann, deren umgekehrtes Ende jeweils verschlossen ist.

Ein Filterelement aus einem derartigen Filtermedium, das heißt mit einem derartigen Filtermaterialkern, ist bei der aus EP 0 900 118 B1, Fig. 13 bekannten Ausführung mit einem Rahmen versehen. Dieser Rahmen ist einerseits dicht und fest mit dem Filtermaterialkern verbunden und andererseits mit Halte- und Dichtmitteln versehen, um in einer Trennebene eines teilbaren Filtergehäuses zwischen axial angreifenden Widerlagern der in der Teilungsebene zu schließenden Filtergehäuseteile dicht aufgenommen und axial fixiert werden zu können.

Aus der WO 03/084641 A2 ist ein weiteres gattungsgemäßes Filterelement bekannt.

Die Erfindung beschäftigt sich mit dem Problem, den Aufbau und die Handhabbarkeit eines solchen Filterelementes zu verbessern. Darüber hinaus soll eine sichere Lage und schwingungsgedämpfte Lagerung erreicht werden und zwar insbesondere mit Bezug auf eine Verwendung als Motor-Ansaugluftfilter in Fahrzeugen, insbesondere Nutzfahrzeugen, die für einen Einsatz in einer äußerst staubhaltigen Atmosphäre geeignet sein müssen.

Gelöst wird der erfindungsgemäße Problemkomplex bereits in erster Linie durch die Ausbildung eines gattungsgemäßen Filterelementes nach den kennzeichnenden Merkmalen des Patentanspruchs 1.

Vorteilhafte und zweckmäßige Ausgestaltungen eines solchen Filterelementes sind Gegenstand der Unteransprüche.

Die im einzelnen mit der Erfindung erzielbaren Vorteile werden nachstehend an gezeichneten Ausführungsbeispielen erläutert.

In der Zeichnung zeigen
- Fig. 1: eine Explosionsdarstellung eines Filtergehäuses mit einem austauschbaren Filterelement,
- Fig. 2: einen Ausschnitt aus dem einströmseitigen Ende des Filterelementes nach Fig. 1 in einem Längsschnitt in perspektivischer Darstellung,
- Fig. 3: einen Längsschnitt durch das einströmseitige Ende des Filtergehäuses nach Fig. 1 mit eingesetztem Fil- terelement in perspektivischer Darstellung,
- Fig. 4: einen Schnitt durch das einströmseitige Ende eines Filterelementes bei einer alternativen Rahmenausbil- dung in perspektivischer Darstellung,
- Fig. 5: einen Schnitt durch das abströmseitige Ende des Fil- tergehäuses nach Fig. 1 mit einem darin eingesetzten Sicherheitsfilterelement,
- Fig. 6: eine perspektivische Ansicht des Sicherheitsfilter- elementes nach Fig. 5 mit einer Sicht auf die An- strömseite,
- Fig. 7: einen Ausschnitt aus dem Bereich einer Einfüllöff- nung in eine erste Ringnut des Filterelemente- Rahmens.

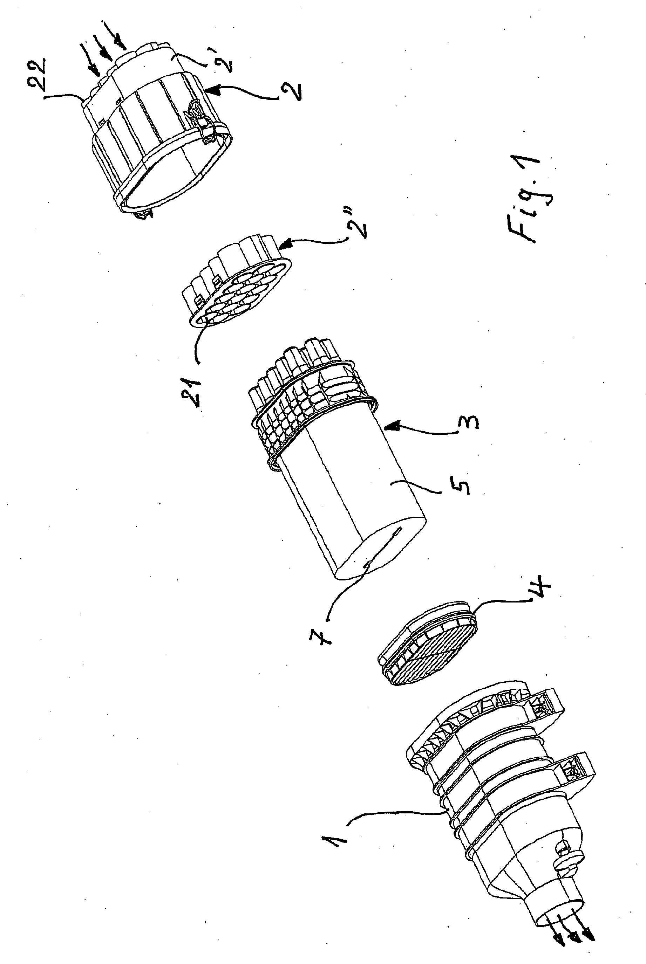

Das in Fig. 1 in Explosionsdarstellung gezeigte Filter stellt ein Motor-Ansaugluftfilter eines Nutzfahrzeuges dar. Bei dem Nutzfahrzeug, bei dem ein solches Filter eingesetzt wird, handelt es sich um ein solches, das geeignet sein muss, in äußerst staubhaltiger Atmosphäre eingesetzt werden zu können.

Das Filtergehäuse besteht aus einem ersten und einem zweiten Gehäuseteil 1, 2. Dabei stellt das erste Gehäuseteil 1 den Gehäusemantel und das zweite Gehäuseteil 2 den Gehäusedeckel des Filters dar. Die Durchströmung des Filters erfolgt entsprechend den in Fig. 1 eingetragenen Strömungspfeilen, das heißt die zu filternde Luft tritt durch den Gehäusedeckel 2 ein und verlässt das Filtergehäuse 1, 2 durch den Gehäusemantel. Auf dem Weg durch das Filtergehäuse durchströmt die Luft als Filtermedium ein Filterelement 3 axial und verlässt sodann nach ebenfalls einem axialen Durchströmen eines nachgeschalteten Filter-Sicherheitseinsatzes 4 den Gehäusemantel des ersten Filtergehäuseteiles 1.

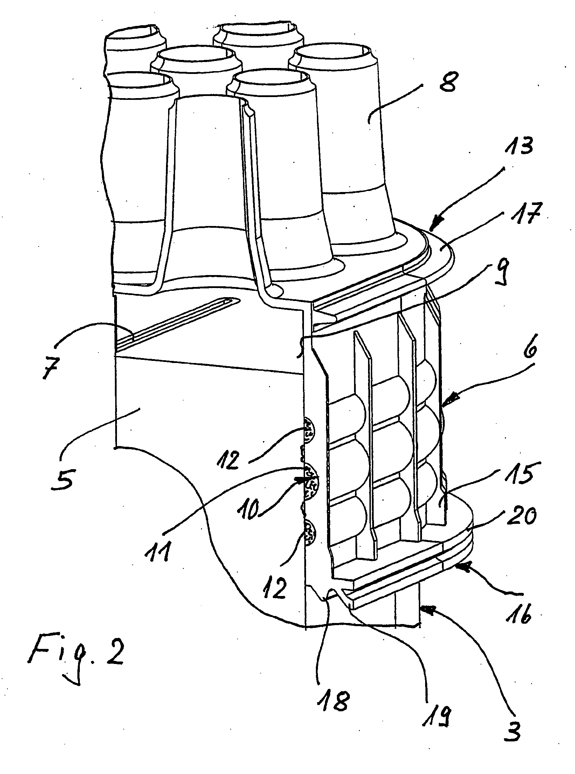

Das Filterelement 3 umfasst einen zylindrischen Filtermaterial-Kern 5 sowie einen diesen einenends umschließenden Rahmen 6. Die Lagerung des Filtermaterialkerns 5 des Filterelementes 3 in dem an dessen Anströmende angebrachten Rahmen 6 wird nachstehend mit Bezug auf zunächst die Fig. 2 näher erläutert.

Bei dem Filtermaterialkern 5 handelt es sich um ein aus den eingangs genannten Dokumenten EP 0 900 118 B1 und WO 02/20135 A2 bekanntes Filtermedium. Ein solcher Filtermaterialkern 5 wird durch Aufwickeln einer doppelwandigen Filterbahn um eine zentrale Kernleiste 7 erzeugt, weshalb ein solches Filterelement 3 auch als Wickelfilterelement bezeichnet wird. Durch die spiralförmig aufgewickelte doppelwandige Filterbahn entstehen die in der Beschreibungseinleitung beschriebenen, axialen Strömungskanäle für das Filtermedium.

Die doppelwandigen Filterbahnen besitzen jeweils eine glatt durchgehende Außenwand. Die Ausrichtung der gewickelten Filterbahn ist derart, dass radial außen an dem Filterelement 3 die durchgehend glatte Filterbahnaußenwand zu liegen kommt.

Der Rahmen 6 ist bei der in Fig. 2 gezeigten Ausführung topfförmig gestaltet. Der Topfboden enthält eine Vielzahl an rohrförmigen Zuführstutzen 8 für in das Filterelement 3 axial einzuführendes Filtermedium, das heißt hier speziell zu reinigende, staubhaltige Luft.

Der Randbereich des topfförmigen Rahmens 6 dient zur dichten Aufnahme des Filterkernmaterials 5. Der Mantelbereich des Rahmens 6 besitzt innen eine zylindrische Innenwand 9, in die der Filtermaterialkern 5 in seiner gewickelten Form eingeschoben werden kann. Zur Sicherung in der eingeschobenen Position sowie zur Erzielung einer Dichtung zwischen der Außenwand des Filtermaterialkerns 5 und der Innenwand 9 des Rahmens wird folgende Dichtungs- und Befestigungsmaßnahme ergriffen.

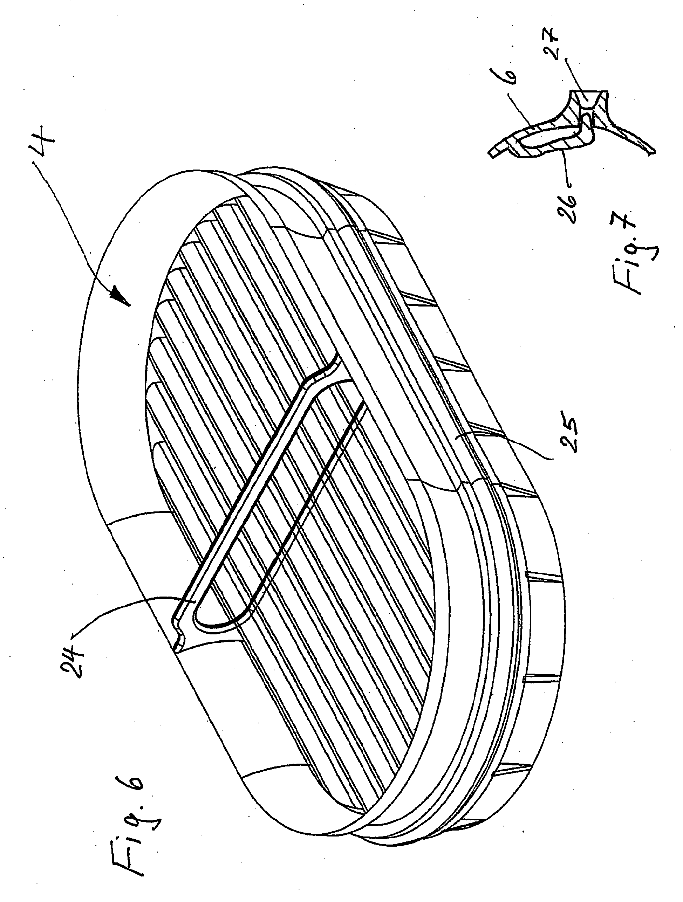

In der Innenwand 9 des Rahmens 6 ist eine nach radial innen offene, erste Ringnut 10 vorgesehen. Nach radial außen führt aus dieser ersten Ringnut 10 eine radiale Einfüllöffnung 27. Diese radiale Öffnung dient dazu, die Ringnut 10 von außen mit einem innerhalb der Ringnut 10 aufschäumbaren Füllmaterial 11 zu befüllen. Die radiale Einfüllöffnung 27 kann mit einem Rückschlagventil 26 versehen sein (Fig. 7), damit das eingefüllte Füllmaterial in der sich nach außen automatisch, das heißt unter dem Druck des aufschäumenden Füllmaterials, verschließenden Ringnut 10 - diese vollständig ausfüllend - aufschäumen kann.

Um ein vollständiges Ausfüllen der Ringnut 10 und gleichzeitig ein gewisses Eindringen in die Oberfläche der Außenwand des Filtermaterialkernes 5 sicherzustellen, sind axial benachbart zu der ersten Ringnut 10 jeweils eine zweite Ringnut 12 vorgesehen. Der Querschnitt dieser zweiten Ringnuten 12 ist zweckmäßigerweise kleiner als derjenige der ersten Ringnut 10. Durch das Vorsehen zu der ersten Ringnut 10 benachbarter zweiter Ringnuten 12 kann die erste Ringnut 10 mit in aufgeschäumtem Zustand Materialüberschuss versorgt werden, da dieser Materialüberschuss in die benachbarten zweiten Ringnuten 12 unter einer sicheren Benetzung der Außenwand des Filtermaterialkernes 5 abströmen kann. Die zweiten Ringnuten 12 dienen in erster Linie lediglich zur Aufnahme aus der ersten Ringnut 10 austretenden Überschussmateriales und müssen und sollen von Füllmaterial 10 nicht vollständig ausgefüllt sein.

Der Rahmen 6 ist aus stabilem, im wesentlichen starrem Material und soll unter anderem, als Griff für ein Herausziehen des Filterelementes 3 aus dem ersten Filtergehäuseteil 1 bei einem Filterelementewechsel dienen. Als Ausziehhilfe kann der Rahmen 6 an seinem axial freien Ende mit einem Ringbund 13 versehen sein, der in dieser Form die Funktion eines Demontagegriffes besitzt. Dies bedeutet, dass das Filterelement 3 an einem solchen Ringbund 13 als Demontagegriff leicht von Hand aus dem ersten Filtergehäuseteil 1 bei einem Filterelementewechsel herausgezogen werden kann. Der Ringbund 13 kann Träger einer zweiten Dichtung 17 des Filterelementes 3 sein.

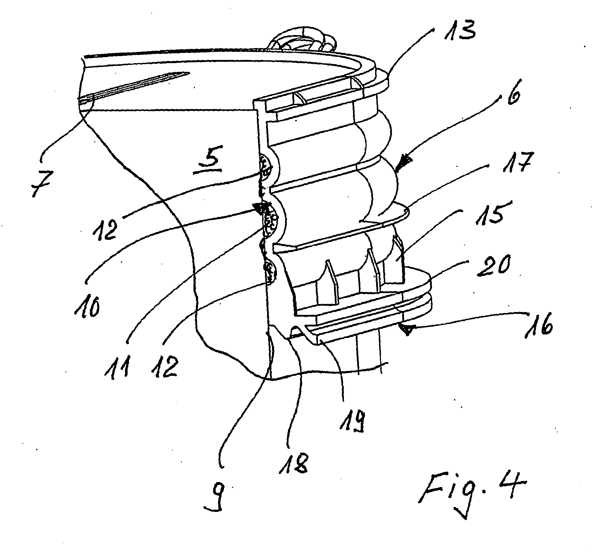

Die Ausführung nach Fig. 4 unterscheidet sich im wesentlichen von derjenigen nach Fig. 2 lediglich dadurch, dass der Rahmen 6 dort keinen Boden mit eingeformten Zuführstutzen 8 besitzt. Des weiteren ist bei der Ausführung nach Fig. 4 die zweite Dichtung 17 gegenüber dem Ringbund 13 beabstandet ausgebildet.

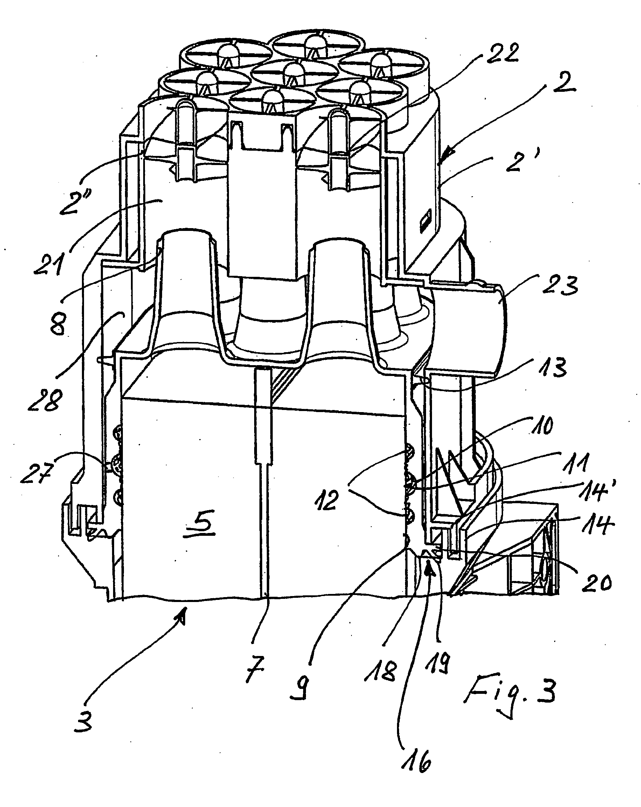

Nachstehend wird die Lagerung und Dichtung des Filterelementes 3 über dessen Rahmen 6 in dem Filtergehäuse 1, 2 mit Bezug auf die Darstellung in Fig. 3 beschrieben.

In zusammengesetztem Zustand, das heißt bei einem geschlossenen Filtergehäuse 1, 2, greifen die beiden Filtergehäuseteile 1 und 2 axial über an deren Enden jeweils U-förmig ausgebildete Gehäuseringstege 14 und 15 ineinander. Die Filtergehäuseteile 1, 2 sind hierdurch radial zentriert.

Radial gegenüber dem Filtergehäuse 1, 2, das heißt speziell gegenüber dem zweiten Filtergehäuseteil 2 zentriert ist das Filterelement 3 über auf dem Außenmantel des Rahmens 6 angeformte Passstege 15, die als solche besser in Fig. 4 erkennbar sind.

Zur Dichtung zwischen Atmosphäre außerhalb des Filtergehäuses 1, 2 und dem Reinraum des Filterelementes 3 dienen an dem Rahmen 6 des Filterelementes 3 vorgesehene, vorzugsweise angespritzte, elastische Dichtungen nämlich eine erste Dichtung 16 mit einer Dichtwirkung gegenüber dem ersten Filtergehäuseteil 1 und eine zweite Dichtung 17 mit einer Dichtwirkung gegenüber dem zweiten Filtergehäuseteil 2.

Die erste Dichtung 16 ist an der abströmseitigen Stirnfläche des Rahmens 6 angebracht. Dabei weist die ringförmige erste Dichtung 16 einen radial inneren Bereich 18 und einen radial äußeren Bereich 19 auf. Der radial innere Bereich 18 der ersten Dichtung 16 liegt formschlüssig an der Stirnfläche des Rahmens 6 an. Dieser radial innere Bereich 18 dient als Widerlager des Rahmens 6 gegenüber einem gehäuseseitigem Widerlager in dem ersten Gehäuseteil 1. Als Widerlager gegenüber einem gehäuseseitigen Widerlager innerhalb des zweiten Gehäuseteiles 2 dient ein radial von dem Rahmen 6 abstehender Ringsteg 20, der im abströmseitigen Stirnbereich des Rahmens 6 liegt. Bei geschlossenem Filtergehäuse 1, 2 ist das Filterelement 3 über den Rahmen 6 und dort praktisch über den Ringsteg 20 zwischen den beiden Gehäuseteilen 1 und 2 axial fest eingespannt. Da eines der dem Filtergehäuse 1, 2 zugewandten Widerlager des Rahmens 6 im Bereich des Ringsteges 20 durch elastisches Dichtmaterial der ersten Dichtung 16 überdeckt ist, liegt eine entsprechend elastische, axiale Verspannung des Ringfilterelementes 3 über dessen Rahmen 6 innerhalb des Filtergehäuses 1, 2 vor. Die GehäuseRingstege 14, 14' sind derart ausgebildet, das heißt aufeinander abgestimmt, dass diese bei geschlossenem Filtergehäuse 1, 2 nicht axial aneinander anliegen, wodurch eine Doppelpassung in axialer Richtung mit Bezug auf die Lagerung des Rahmens 6 über dessen Ringsteg 20 vermieden wird.

In dem radial äußeren Bereich 19 ragt die erste Dichtung 16 in einem spitzen Winkel von der zugeordneten Stirnfläche des Ringsteges 20 in Durchströmrichtung des Filters ab. In diesem Bereich ist die erste Dichtung 16 elastisch verformbar und derart vorgespannt, dass sie bei geschlossenem Filtergehäuse gegenüber einem zugeordneten Widerlager des ersten Gehäuseteils 1 insbesondere axiale Dichtwirkung ausübt. Hierdurch ist eine besonders sichere Abdichtung zwischen dem ersten Gehäuseteil 1 und dem Rahmen 6 gegeben. Hierbei kann vorgesehen sein, dass in dem Filtergehäuse 1,2 zur axialen Lagerung des Filterelementes 3 lediglich Widerlager vorgesehen sind, zwischen denen das Filterelement 3 über dessen Ringsteg 20 einspannbar ist.

Die zweite Dichtung 17 ist eine Radialdichtung, die insbesondere fest mit dem Rahmen 6 verbunden ist und für eine Dichtung zwischen dem Rahmen 6 und dem zweiten Gehäuseteil 2 dient.

Während die zweite Dichtung 17 bei der Ausführung nach Fig. 3 direkt an dem anströmseitigen Ende des Filterelementes 3 liegt, ist sie bei der Ausführung nach Fig. 4 axial relativ eng benachbart zu dem Ringsteg 20 des Rahmens 6, an dem dieser axial innerhalb des Filtergehäuses 1, 2 fixiert ist, angebracht. Funktionell wirken diese zweiten Dichtungen 17 unabhängig von ihrer axialen Anordnung an dem Rahmen völlig gleich.

Bei der Ausführung des zweiten Gehäuseteiles 2 nach der Fig. 3 sind in dessen anströmseitigem Bereich Drallerzeugungskanäle 21 in einer Vielzahl vorgesehen. Drallerzeugend wirken diese Kanäle deshalb, weil in ihnen anströmseitig in an sich bekannter Weise Drallerzeuger 22 vorgesehen sind. In die Drallerzeugungskanäle 21 ragen bei geschlossenem Filtergehäuse die im Boden des Rahmens 6 bei dessen Ausführung nach Fig. 3 vorgesehenen Zuführstutzen 8 derart hinein, dass insgesamt je Drallerzeugungskanal 21 ein Abscheidezyklon entsteht. In diesen Zyklonen werden durch die Drallwirkung Schmutzpartikel nach radial außen gedrängt, wodurch sie sich in Ringräume zwischen den Zuführstutzen 8 und den Drallerzeugungskanälen 21 zu einer dortigen Ablagerung bewegen. Aus den vorgenannten Ringräumen können die dort abgeschiedenen Schmutzpartikel in einen Schmutzsammelraum 28 zwischen den Außenwänden der Zuführstutzen 8 und der Gehäusewand des zweiten Filtergehäuseteiles 2 abströmen. Durch eine verschließbare Öffnung 23 in dem zweiten Filtergehäuseteil 2 kann in dem Schmutzsammelraum 28 abgelagerter, partikelförmiger Schmutz abgesaugt werden. Die einzelnen vorstehend beschriebenen Zyklone bewirken damit insgesamt eine Schmutz-Vorabscheidung.

Generell kann vorgesehen sein, dass das zur Aufnahme des Rahmens 6 dienende zweite Filtergehäuseteil 2 an seinem den Zuführstutzen 8 des Filterelementes-Rahmens 6 zugeordneten Ende mit den Zuführstutzen 8 zugeordneten strömungsdrallerzeugenden Einlasskanälen 21 versehen ist, wobei diese Einlasskanäle 21 mit den jeweils zylindrischen Zuführstutzen 8 des Filterelementes 3 Abscheidezyklone in einer der Anzahl der Zuführstutzen 8 entsprechenden Anzahl bilden.

Eine erfindungsgemäße Ausgestaltung eines solchen Vorabscheiders durch eine Integration eines Teils der einzelnen Zyklone in den Boden des Rahmens 6 eines Filterelementes 3 hat den großen Vorteil, dass bei einem Filterelementeaustäusch, bei dem das Filtergehäuse geöffnet wird, automatisch der Schmutzsammelraum 28 innerhalb des zweiten Gehäuseteils 2 geöffnet wird. Hierdurch können dort angesammelte Schmutzpartikel von selbst abfallen, ohne hierfür eine Absaugeeinrichtung benutzen zu müssen.

Bei der in Fig. 1 und 3 dargestellten Ausführung des zweiten Filtergehäuseteiles 2 setzt sich dieses aus zwei getrennt hergestellten Teilelementen zusammen, nämlich einer Außenwand 2' des zweiten Filtergehäuseteiles 2 als erstem Teilelement und einem das zweite Teilelement bildenden Einsatzteil 2". Die Drallerzeuger 22 setzen sich aus Teilelementen zusammen, die aufgeteilt sind auf einerseits die Außenwand 2' und andererseits das Einsatzteil 2". Durch eine solche Aufteilung in Teilelemente 2', 2", die erst nach einer getrennten Herstellung bei der Filtermontage durch beispielsweise ein gegenseitiges Verrasten miteinander verbunden werden müssen, sind diese Drallerzeuger 22 fertigungstechnisch rationell herstellbar. Es kann eine Vielzahl an parallel durchströmbarer Drallerzeuger 22 durch lediglich ein Kunststoffspritzgießen von zwei Einzelbauteilen 2', 2" hergestellt werden.

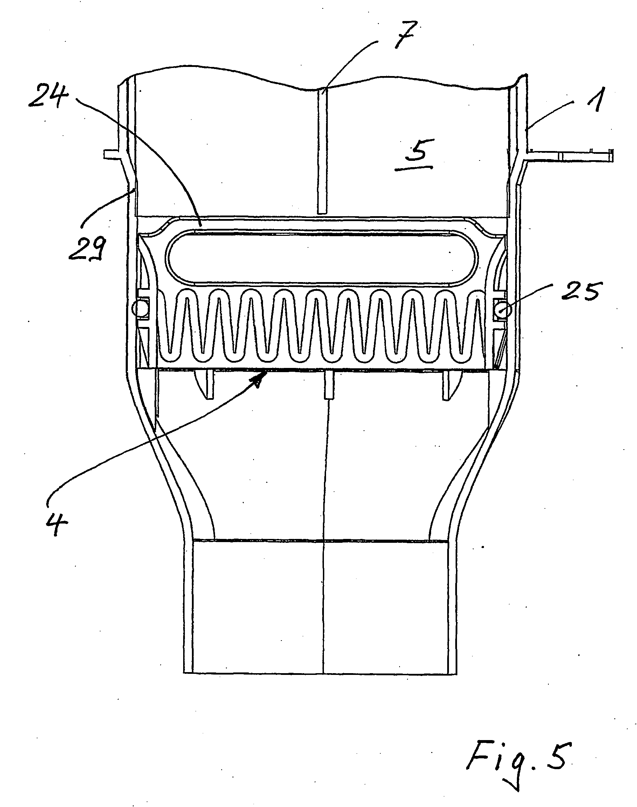

Abströmseitig ist in dem ersten Filtergehäuse 1 ein Filtersicherheitseinsatz 4 entsprechend den Darstellungen in den Fig. 5 und 6 vorgesehen. Anströmseitig ist dieser Sicherheitsfiltereinsatz 4 mit einem Entnahmegriff 24 versehen. Radial außen ist eine Moosgummidichtung 25 zur Dichtung gegenüber dem ersten Filtergehäuseteil 1 vorgesehen.

An dem abströmseitigen Ende ist das Filterelement 3 radial durch direkte Anlage an einem entsprechend ausgebildeten, das heißt radial nach innen eingezogenen, Abschnitt 29 des ersten Filtergehäuseteiles zentriert (Fig. 6).

Fig. 7 zeigt eine mögliche Ausführung eines Rückschlagventiles 26 in einer ersten Ringnut 10. Bei dieser Ausführung eines Rückschlagventiles 26 ist bei einer Kunststoffausführung des Rahmens 6 in diesem eine rückschlagwirkende Federzunge einformt.

## Patentansprüche

1. Filterelement (3) mit einem zylindrischen, porösen, längsdurchströmbaren Filtermaterial-Kern (5) und einem, den Kern radial einenends dicht umschließenden Rahmen (6) mit Dicht- und Haltemitteln, über die das Filterelement (3) lösbar dicht in ein Filtergehäuse (1, 2) einsetzbar ist,
**gekennzeichnet durch** die Merkmale,
- der Rahmen (6) umfasst eine zum Filtermaterial-Kern (5) hin offene erste Ringnut (10),
- die erste Ringnut (10) ist vollständig mit einem aufgeschäumten Füllmaterial (11) ausgefüllt,
- das aufgeschäumte Füllmaterial resultiert aus einer Flüssigkeit, die zum Zwecke eines Aufschäumens in die bereits an dem Filtermaterial-Kern (5) anliegende erste Ringnut (10) **durch** eine in dieser vorgesehene Einfüllöffnung (27) eingefüllt worden ist.

2. Filterelement (3) nach Anspruch 1 für einen Einsatz in ein geteiltes Filtergehäuse mit einem ersten und einem zweiten Filtergehäuseteil (1, 2) besitzt.
**dadurch gekennzeichnet,**
**dass** der Rahmen (6) zwei axial voneinander getrennte Dichtungen (16, 17) für eine Zuordnung zu jeweils einem der beiden Filtergehäuseteile (1, 2) besitzt.

3. Filterelement (3) nach Anspruch 1 oder 2,
**dadurch gekennzeichnet,**
**dass** die Haltemittel des Rahmens (6) einen radial abstehenden Ringsteg (20) umfassen, über den das Filterelement axial zwischen Widerlagern des teilbaren Filtergehäuses (1, 2) einspannbar ist.

4. Filterelement (3) nach einem der vorhergehenden Ansprüche,
**gekennzeichnet durch** die Merkmale,
- der Ringsteg (20) weist zumindest an einer seiner beiden axialen Stirnseiten eine erste elastische Dichtung (16) auf,
- die elastische Dichtung (16) liegt in einem radial innenliegenden ersten Bereich (18) formschlüssig an dem Ringsteg (13) an, in dem sich der Ringsteg (13) bei in das Filtergehäuse (1, 2) eingesetztem Zustand gegenüber einem filtergehäuseseitigen Widerlager abstützt,
- in einem radial nach außen verbleibenden zweiten Bereich der ersten Dichtung (16) ist diese axial und radial elastisch frei verformbar ausgebildet für eine entsprechende Verformung bei in das Filtergehäuse (1, 2) eingesetztem Filterelement (3) innerhalb radial und axial angrenzender filtergehäuseseitiger Widerlager.

5. Filterelement (3) nach einem der vorhergehenden Ansprüche,
**dadurch gekennzeichnet,**
**dass** die elastische zweite Dichtung (17) axial von der ersten Dichtung (16) beabstandet von dem Rahmen (6) nach radial außen für eine radiale Dichtung gegenüber einem zugeordneten Bereich des Filtergehäuses (1, 2) absteht.

6. Filterelement (3) nach einem der vorhergehenden Ansprüche,
**dadurch gekennzeichnet,**
**dass** der ersten Ringnut (10) axial benachbart jeweils mindestens eine weitere, zweite Ringnut (12) zugeordnet ist.

7. Filterelement (3) nach einem der vorhergehenden Ansprüche,
**dadurch gekennzeichnet,**
**dass** zumindest die erste Ringnut (10) mit einer radial nach außen führenden Einfüllöffnung (27) versehen ist.

8. Filterelement (3) nach Anspruch 7,
**dadurch gekennzeichnet,**
**dass** der Einfüllöffnung (27) ein Rückschlagventil (26) zugeordnet ist.

9. Filterelement (3) nach einem der vorhergehenden Ansprüche,
**dadurch gekennzeichnet,**
**dass** der Rahmen (6) das betreffende Ende des Filterelementes (3) stirnseitig umgreift, wobei der Ringsteg (20) gegenüber diesem axialen Ende des Rahmens (6) beabstandet ist.

10. Filterelement (3) nach einem der vorhergehenden Ansprüche,
**dadurch gekennzeichnet,**
**dass** der Rahmen (6) das zugehörige axiale Ende des Filterelementes (3) topfförmig umschließt mit einer Vielzahl in dem Topfboden vorgesehener, nach axial außen abstehender Zuführstutzen (8) für in das Filterelement (3) einströmendes Filtermedium.

11. Filterelement (3) nach einem der vorhergehenden Ansprüche mit einem aufnehmenden Filtergehäuse um Filtern der Motor-Ansaugluft in einem Kraftfahrzeug, insbesondere Nutzfahrzeug.

## Claims

1. A filter element having a cylindrical porous filter material core (5) through which the flow can pass longitudinally and a frame (6) tightly surrounding the core radially at one end and having sealing and holding means by which the filter element (3) is detachably but tightly insertable into a filter housing (1, 2),
**characterized by** the features,
- the frame (6) comprises a first annular groove (10) which is open toward the filter material core (5),
- the first annular groove (10) is completely filled with a foamed filling material (11),
- the foamed filling material results from a liquid which has been added to the first annular groove (10) that is already in contact with the filter material core (5) through a filling opening (27) provided therein for the purpose of foaming.

2. The filter element (3) according to Claim 1 for insertion into a divided filter housing having a first and a second filter housing part (1, 2),
**characterized in that**
the frame (6) has two gaskets (16, 17) that are separated axially from one another for assignment to either one of the two filter housing parts (1, 2).

3. The filter element (3) according to Claim 1 or 2, **characterized in that**
the holding means of the frame (6) comprise a radially protruding ring web (20) by means of which the filter element can be clamped axially between the abutments of the divisible filter housing (1, 2).

4. The filter element (3) according to any one of the preceding claims,
**characterized by** the features,
- the ring web (20) has a first elastic gasket (16) on at least one of its two axial end faces,
- the elastic gasket (16) is in form-fitting contact with the ring web (13) in a first area (18) that is on the inside radially, in which the ring web (13) is supported with respect to an abutment on the filter housing end in a state in which it is inserted into the filter housing (1, 2),
- in a second area of the first gasket (16) that remains on the outside radially, the gasket is freely deformable elastically and radially for a corresponding deformation when the filter element (3) is inserted into the filter housing (1, 2) within abutments on the filter housing end that are adjacent radially and axially.

5. The filter element (3) according to any one of the preceding claims,
**characterized in that**
the second elastic gasket (17) protrudes axially away from the frame (6) radially outside so it is an axial distance away from the first gasket (16) for a radial gasket opposite a respective area of the filter housing (1, 2).

6. The filter element (3) according to any one of the preceding claims,
**characterized in that**
the first annular groove (10) is axially adjacent to at least one other second annular groove (12).

7. The filter element (3) according to any one of the preceding claims,
**characterized in that**
at least the first annular groove (10) is provided with a filling opening (27) leading radially outward.

8. The filter element (3) according to Claim 7, **characterized in that**
a nonreturn valve (26) is assigned to the filling opening (27).

9. The filter element (3) according to any one of the preceding claims,
**characterized in that**
the frame (6) surrounds the respective end of the filter element (3) on the end, whereby the ring web (20) is spaced a distance apart from this axial end of the frame (6).

10. The filter element (3) according to any one of the preceding claims,
**characterized in that**
the frame (6) surrounds the respective axial end of the filter element (3) in the form of a pot with a plurality of feed connections (8) that are provided in the bottom of the pot and protrude axially outward for the filter medium flowing into the filter element (3).

11. A filter element (3) according to any one of the preceding claims, with a filter housing containing the filter element (3) for filtering the engine intake air in a motor vehicle, in particular in a truck.

## Revendications

1. Elément filtrant (3) doté d'un élément central à matériau filtrant (5), cylindrique, poreux, pouvant être traversé dans le sens de la longueur et d'un cadre (6) entourant de façon étanche radialement par une extrémité l'élément central avec des moyens d'étanchéité et de retenue, par lesquels l'élément filtrant (3) peut être inséré de façon amovible et étanche dans un boîtier de filtre (1, 2),
**caractérisé par** les caractéristiques suivantes :
- le cadre (6) comporte une première rainure annulaire (10) ouverte en direction de l'élément central à matériau filtrant (5)
- la première rainure annulaire (10) est remplie complètement avec un matériau de charge (11) moussé,
- le matériau de charge moussé est le résultat d'un liquide qui a été versé dans le but d'un moussage dans la première rainure annulaire (10) s'appliquant déjà sur l'élément central à matériau filtrant (5) par une ouverture de remplissage (27) prévue dans cette rainure.

2. Elément filtrant (3) selon la revendication 1 destiné à être inséré dans un boîtier de filtre divisé comprenant une première et une seconde parties de boîtier de filtre (1, 2)
**caractérisé en ce que**
le cadre (6) présente deux joints (16, 17) séparés axialement l'un de l'autre pour une attribution à respectivement l'une des deux parties de boîtier de filtre (1, 2).

3. Elément filtrant (3) selon la revendication 1 ou 2, **caractérisé en ce que**
les moyens de retenue du cadre (6) comportent une nervure annulaire (20) débordant radialement, par laquelle l'élément filtrant peut être tendu entre des butées du boîtier de filtre (1, 2) divisible.

4. Elément filtrant (3) selon l'une quelconque des revendications précédentes,
**caractérisé par** les caractéristiques suivantes,
- la nervure annulaire (20) présente au moins sur l'une de ses deux faces avant axiales un premier joint (16) élastique,
- le joint (16) élastique s'applique dans une première zone (18) radialement intérieure par complémentarité de formes sur la nervure annulaire (13), zone dans laquelle la nervure annulaire (13) s'appuie dans l'état inséré dans le boîtier de filtre (1, 2) par rapport à une butée côté boîtier de filtre,
- dans une seconde zone, restant radialement vers l'extérieur, du premier joint (16), celui-ci est conçu de façon à pouvoir être déformé librement dans le sens axial et le sens radial pour une déformation appropriée lorsque l'élément filtrant (3) est inséré dans le boîtier de filtre (1, 2) à l'intérieur de butées côté boîtier de filtre adjacentes radialement et axialement.

5. Elément filtrant (3) selon l'une quelconque des revendications précédentes,
**caractérisé en ce que**
le second joint (17) élastique déborde axialement du premier joint (16) à distance du cadre (6) vers l'extérieur radialement pour une étanchéité radiale par rapport à une zone attribuée du boîtier de filtre (1, 2).

6. Elément filtrant (3) selon l'une quelconque des revendications précédentes,
**caractérisé en ce que**
à chaque fois au moins une autre seconde rainure annulaire (12) est attribuée à la première rainure annulaire (10) et est voisine axialement de celle-ci.

7. Elément filtrant (3) selon l'une quelconque des revendications précédentes,
**caractérisé en ce que**
au moins la première rainure annulaire (10) est dotée d'une ouverture de remplissage (27) allant radialement vers l'extérieur.

8. Elément filtrant (3) selon la revendication 7, **caractérisé en ce que**
un clapet anti-retour (26) est attribué à l'ouverture de remplissage (27).

9. Elément filtrant (3) selon l'une quelconque des revendications précédentes,
**caractérisé en ce que**
le cadre (6) entoure l'extrémité concernée de l'élément filtrant (3) côté avant, la rainure annulaire (20) étant espacée par rapport à cette extrémité axiale du cadre (6).

10. Elément filtrant (3) selon l'une quelconque des revendications précédentes,
**caractérisé en ce que**
- le cadre (6) entoure à la façon d'un pot l'extrémité axiale spécifique de l'élément filtrant (3) avec une pluralité de tubulures d'arrivée (8) prévus dans le fond du pot et débordant vers l'extérieur axialement pour l'agent filtrant entrant dans l'élément filtrant (3).

11. Elément filtrant (3) selon l'une quelconque des revendications précédentes, doté d'un boîtier de filtre récepteur pour le filtrage de l'air d'aspiration du moteur sur un véhicule, en particulier un véhicule utilitaire.
